# FASCICULE DE BREVET EUROPEEN

(11) **EP 1 169 231 B1**
(45) Date de publication et mention de la délivrance du brevet: **24.11.2004**
(21) Numéro de dépôt: 00914177.1
(22) Date de dépôt: 31.03.2000
(51) Int. Cl.: B65D 23/10, B29C 49/48

(54) **RECIPIENT EN PLASTIQUE AVEC RELIEF EN CREUX FORMANT PLUS PARTICULIEREMENT POIGNEE DE PREHENSION ET PROCEDE DE FABRICATION D'UN TEL RECIPIENT**
KUNSTSTOFFBEHÄLTER MIT EINER VERTIEFUNG INSBESONDERE ZUM GREIFEN, UND VERFAHREN ZU SEINER HERSTELLUNG
PLASTIC CONTAINER WITH HOLLOW EMBOSSMENT MORE PARTICULARLY FORMING A GRIP HANDLE AND METHOD FOR MAKING SAME

(30) Priorité: 01.04.1999 FR 9904285
(43) Date de publication de la demande: 09.01.2002
(73) Titulaire: AMCOR LIMITED, Abbotsford, Victoria 3067 (AU)
(72) Inventeur: HAESENDONCKX, Frank, B-8630 Veurne (BE)
(74) Mandataire: Matkowska, Franck
(86) Numéro de dépôt international: PCT/EP2000/002888
(87) Numéro de publication internationale: WO 2000/059790

(56) Documents cités:
- EP-A- 0 505 054
- EP-A- 0 590 782
- US-A- 3 983 199
- US-A- 4 123 217
- US-A- 4 170 622
- US-A- 5 122 327
- US-A- 5 472 105
- PATENT ABSTRACTS OF JAPAN vol. 015, no. 273 (E-1088), 11 juillet 1991 (1991-07-11) & JP 03 093187 A (TOAGOSEI CHEM IND CO LTD;OTHERS: 01), 18 avril 1991 (1991-04-18)

## Description

La présente invention concerne la fabrication de récipients en plastique. Elle a plus particulièrement pour objets principaux un récipient en plastique dont la paroi comprend au moins une portion formant un relief en creux, un procédé de fabrication d'un tel récipient, ainsi qu'un moule de soufflage pour la mise en oeuvre de ce procédé. L'invention trouve de manière préférentielle son application à la fabrication de récipients comportant des portions déformables qui, une fois déformées, forment une poignée de préhension facilitant la manipulation du récipient.

Dans la suite du présent texte, on désigne par les termes « récipient *final* », le récipient vide qui est obtenu par le procédé de l'invention, avant toute étape de remplissage ce récipient, et par les termes «récipient *intermédiaire »,* le récipient vide qui selon l'invention est destiné à être transformé après déformation de sa paroi en un récipient final, la déformation intervenant avant remplissage du récipient final.

Dans le but de faciliter la manipulation de récipients en plastique, du type bouteilles ou flacons, et principalement lorsqu'il s'agit de récipient de grande contenance, il est connu à ce jour de prévoir sur ces récipients une poignée de préhension.

Selon une première technique, cette poignée est une pièce rapportée que l'on vient fixer sur le corps du récipient en plastique. Cette première technique présente l'inconvénient de nécessiter les fabrications séparées de la poignée et du récipient, et une opération d'assemblage délicate. Pour cette raison, on préfère mettre en oeuvre une seconde technique consistant à réaliser dans la paroi du récipient une poignée de préhension intégrée.

Lorsque le récipient plastique est réalisé de manière usuelle par injection d'une préforme et soufflage de la préforme dans un moule, la poignée de préhension peut être obtenue en prévoyant dans la paroi intérieure du moule de soufflage deux portions saillantes en vis à vis, de telle sorte que le récipient obtenu après démoulage comporte dans sa paroi deux reliefs en creux en vis à vis facilitant la préhension du récipient par un utilisateur. Le principal inconvénient de cette méthode est lié au fait que la profondeur des reliefs en creux formés dans le récipient est limitée. En effet, lors du soufflage de la préforme dans le moule, la résine thermoplastique constituant la préforme vient au contact du moule, dans un premier temps au niveau des portions saillantes, et seulement dans un second temps au niveau des parties restantes du moule. Au contact des portions saillantes, la résine commence à durcir, ce qui laisse moins de matière pour la formation des autres parties du récipient, et modifie par conséquent la distribution de matière dans le récipient, au détriment des propriétés mécaniques du récipient. Pour cette raison avec cette solution on est contraint de prévoir des portions saillantes de très faible dimension, ce qui limite en conséquence la profondeur des reliefs en creux formés dans le récipient ou éventuellement d'utiliser une préforme dont l'épaisseur de paroi est surdimensionnée, ce qui est désavantageux d'un point de vue économique.

Lorsque le récipient plastique est réalisé de manière usuelle par extrusion et soufflage d'une résine thermoplastique dans un moule, il est possible de mettre en oeuvre dans le moule des parties saillantes de plus grande dimension et par là-même de réaliser des reliefs en creux plus profonds que ceux obtenus à ce jour par injection et soufflage d'une préforme. Mais on est dans ce cas contraint de réguler de manière appropriée l'alimentation de la résine thermoplastique à l'entrée du moule, pour compenser les effets des parties saillantes du moule sur la distribution de matière et obtenir la répartition appropriée de matière dans le récipient final, malgré la présence de ces parties saillantes.

La présente invention a pour but principal de proposer une nouvelle solution pour la formation de reliefs en creux dans la paroi d'un récipient en plastique. L'application principale, mais non exclusive de l'invention, réside dans la fabrication de récipients plastiques présentant des reliefs en creux formant poignée de préhension.

La solution de l'invention consiste, pour former un relief en creux dans le récipient, à réaliser dans le récipient une portion qui est préformée pour être déformable mécaniquement, en particulier par simple pression. Ainsi grâce à l'invention, il devient avantageusement possible de réaliser des reliefs en creux présentant une profondeur donnée, et plus particulièrement une profondeur importante, sans qu'il soit nécessaire de mettre en oeuvre dans le moule de soufflage des parties saillantes dont la dimension correspond à la profondeur des reliefs en creux obtenus en final.

L'invention a pour premier objet un récipient vide en plastique conforme à la revendication 1.

L'invention a pour deuxième objet un procédé de fabrication d'un récipient final en plastique selon lequel on réalise un récipient intermédiaire par soufflage d'une résine thermoplastique dans un moule dont les parois sont conformées en sorte de préformer la ou les portions déformables, et on exerce une pression sur chaque portion déformable du récipient intermédiaire en sorte de former chaque relief en creux ; cette pression peut être exercée avant ou après démoulage du récipient intermédiaire.

L'invention a pour objet un moule de soufflage qui est conforme à la revendication 14.

D'autres caractéristiques et avantages de l'invention apparaîtront plus clairement à la lecture de la description ci-après de plusieurs variantes de réalisation d'un récipient conforme à l'invention, laquelle description est donnée à titre d'exemple non limitatif et en référence aux dessins annexés sur lesquels :
- la figure 1 est une vue de coté d'une variante de réalisation d'un récipient plastique intermédiaire, comportant deux portions déformables symétriques de forme arrondie et allongée,
- la figure 2 est une vue de coté du récipient de la figure 1, après formation d'une poignée de préhension du récipient, par déformation des portions déformables,
- la figure 3 est une vue de coté du récipient de la figure 2 après soudure de la poignée et enlèvement de matière en partie centrale en sorte de former une poignée évidée,
- la figure 4 représente le profil initial avant déformation de la paroi du récipient de la figure 1 selon le plan de coupe (IV-IV),
- la figure 5 représente le profil final après déformation de la paroi du récipient de la figure 2, selon le plan de coupe (V-V),
- la figure 6 est une vue schématique en section du récipient de la figure 2 selon le plan de coupe (IV-IV) de la figure 1, et après soudure de la poignée,
- la figure 7 est une vue de face (vue de l'intérieur du récipient) d'un autre exemple de portion déformable selon l'invention,
- la figure 8 est une représentation schématique en perspective de la partie déformable de la figure 7,
- la figure 9 représente le profil initial avant déformation de la portion déformable de la figure 7 selon le plan de coupe IX-IX,
- la figure 10 représente le profil final après déformation de la partie déformable de la figure 9,
- la figure 11 est une vue en coupe d'un moule de soufflage de l'invention,
- et la figure 12 représente deux courbes de pression d'air (air de soufflage et air alimentant les vérins de déformation) d'un cycle de fabrication d'un récipient final au moyen du moule de soufflage de la figure 11.

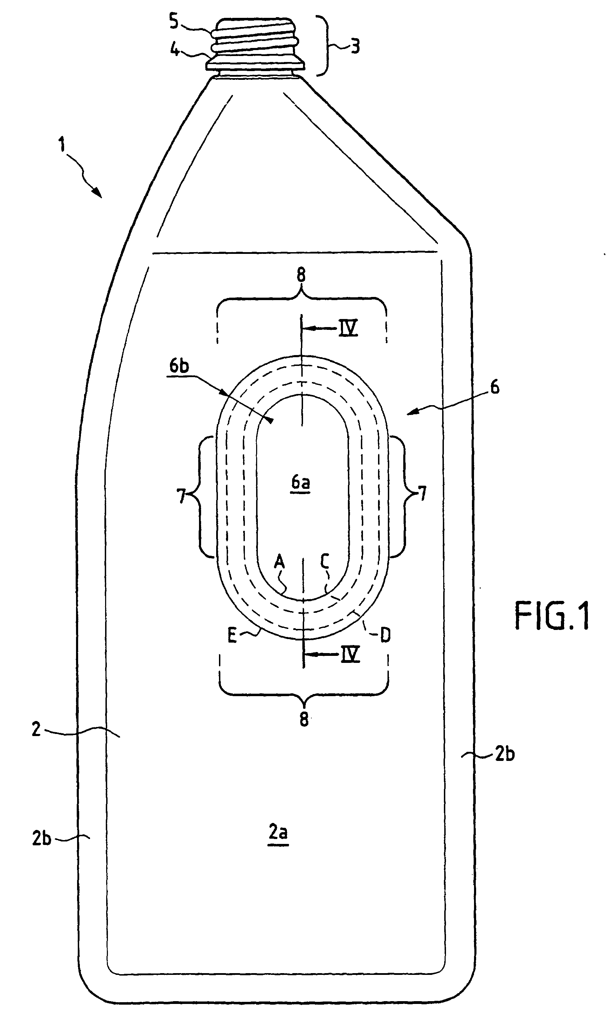

On a représenté à la figure 1 une première variante de réalisation d'un récipient intermédiaire 1 en plastique conforme à l'invention. Dans l'exemple particulier illustré, ce récipient intermédiaire 1 est obtenu de manière usuelle par soufflage d'une préforme dans un moule et comporte un corps creux 2, qui se prolonge en partie haute par un goulot 3 pourvu d'une collerette 4 et d'un filetage 5 pour le vissage d'un bouchon. Dans cette variante de réalisation, le corps creux présente une forme aplatie, et comporte essentiellement deux parois principales parallèles 2a ( dont une seule est visible sur la figure 1) reliées par deux bords arrondis 2b. L'invention n'est toutefois pas limitée à cette forme particulière, mais s'étend à toute forme connue de corps creux et peut notamment s'appliquer à des récipients plastiques dont le corps creux présente un axe central de révolution. Egalement, l'invention, bien que trouvant préférentiellement son application dans le domaine de la fabrication de récipients plastiques par injection et soufflage (de préformes) dans un moule, peut être étendue à la fabrication de récipients plastiques par extrusion et soufflage d'une résine thermoplastique dans un moule. La matière plastique constitutive du récipient n'est pas limitative de l'invention et pourra être toute matière plastique connue dans le domaine de la fabrication de récipients. Plus particulièrement, s'agissant d'un récipient obtenu par injection et soufflage d'une préforme dans un moule, on pourra indifféremment utiliser une préforme réalisée à partir d'une unique résine thermoplastique telle que par exemple une résine de PET (homo - ou copolymère de Polyéthylène Téréphtalate) ou d'un mélange de résines thermoplastiques connues, ou encore utiliser une préforme multicouches obtenue de manière usuelle par co-injection ( parallèle et /ou séquentielle) d'au moins deux résines distinctes.

Conformément à l'invention, le récipient intermédiaire 1 comporte deux portions préformées 6 qui sont déformables mécaniquement. Dans l'exemple illustré, ces deux portions 6 sont réalisées en vis à vis l'une de l'autre respectivement dans les deux parois principales 2a du corps creux 2. Sur la figure 1, qui est une vue de côté, seule l'une des deux portions déformables 6 est visible ; l'autre portion déformable est de préférence identique et réalisée de manière symétrique.

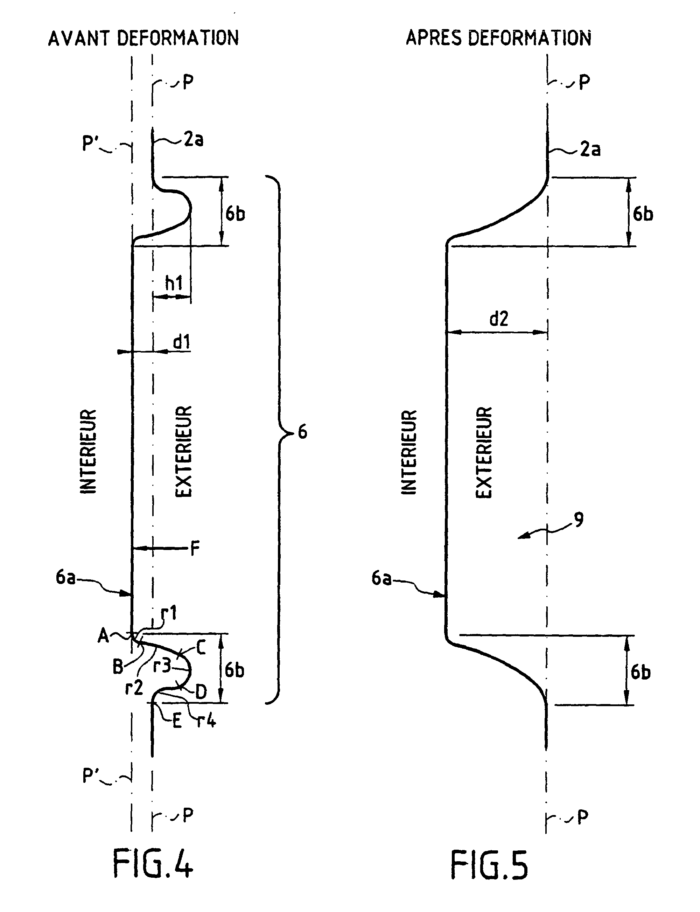

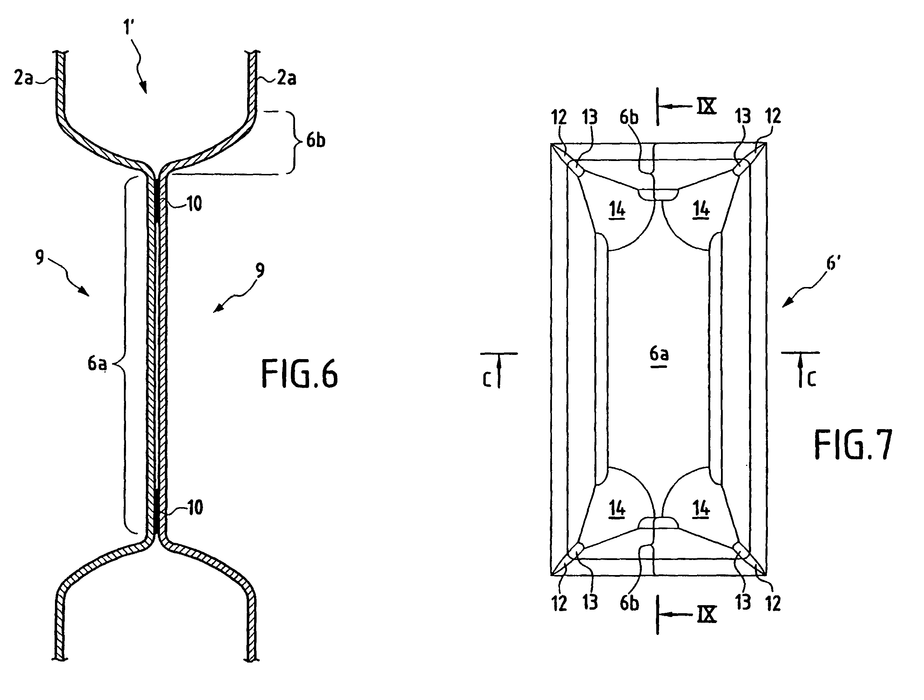

En référence aux figures 1 et 4, une portion déformable 6 est constituée par une zone centrale principale 6a sensiblement plane entourée par une zone d'articulation périphérique 6b. Dans l'exemple particulier illustré, le contour de chaque portion déformable 6 est du type comprenant deux portions rectilignes parallèlles 7 raccordées entre elles par deux portions 8 en arc de cercle. Ce contour particulier n'est pas limitatif de l'invention. Un autre exemple de contour de type rectangulaire sera détaillée ultérieurement en référence aux figures 7 à 10. En outre, le profil particulier de la portion déformable 6 illustré à la figure 4 pourrait convenir à toute forme de contour et pourrait par exemple être utilisé pour une portion déformable présentant un contour circulaire, elliptique, etc.

Sur la figure 4 le plan P-P représente la surface principale de la paroi 2a du corps creux 2. Dans la suite ce plan P-P servira de plan de référence pour la définition des notions de partie en « creux » ou en « saillie » . Dans l'exemple des figures 1 et 4, la zone centrale principale 6a est située dans un plan P'-P' ( figure 4) qui est positionné en retrait par rapport à ce plan P-P, la zone principale 6a étant orientée vers l'intérieur du récipient, c'est-à-dire formant un relief en creux par rapport au plan de référence (P-P). La zone d'articulation 6b raccorde la zone centrale 6a à la partie de la paroi principale 2a située dans le plan principal P-P. Cette zone d'articulation est constituée, depuis la zone centrale 6a et jusque la partie de la paroi principale 2a située dans le plan principal P-P, par :
- une premier portion courbe (AB) concave de faible rayon de courbure r1,
- une deuxième portion courbe (BC) convexe qui se prolonge au delà du plan A-A et qui présente un rayon de courbure r2 supérieur à r1,
- une troisième portion courbe (CD) convexe en saillie de rayon de courbure r3 inférieur à r2 et supérieur à r1,
- et une quatrième portion courbe (DE) concave de rayon r4 inférieur ou égal à r3.

La zone principale 6a forme ainsi avec la première portion courbe (AB) et une partie de la deuxième portion courbe (BC) un relief en creux de faible profondeur (d1) et la partie restante de deuxième portion courbe (BC) forme avec les troisième et quatrième portion courbe de la zone d'articulation 6b un relief en saillie de faible hauteur h1.

Pour obtenir le récipient intermédiaire 1, on utilise un moule de soufflage dont la paroi intérieure est conformée en sorte de présenter le profil de la figure 4. Les opérations de soufflage de la préforme dans le moule pour obtenir le récipient intermédiaire 1 de la figure 1 sont usuelles et ne seront donc pas détaillées dans la présente description.

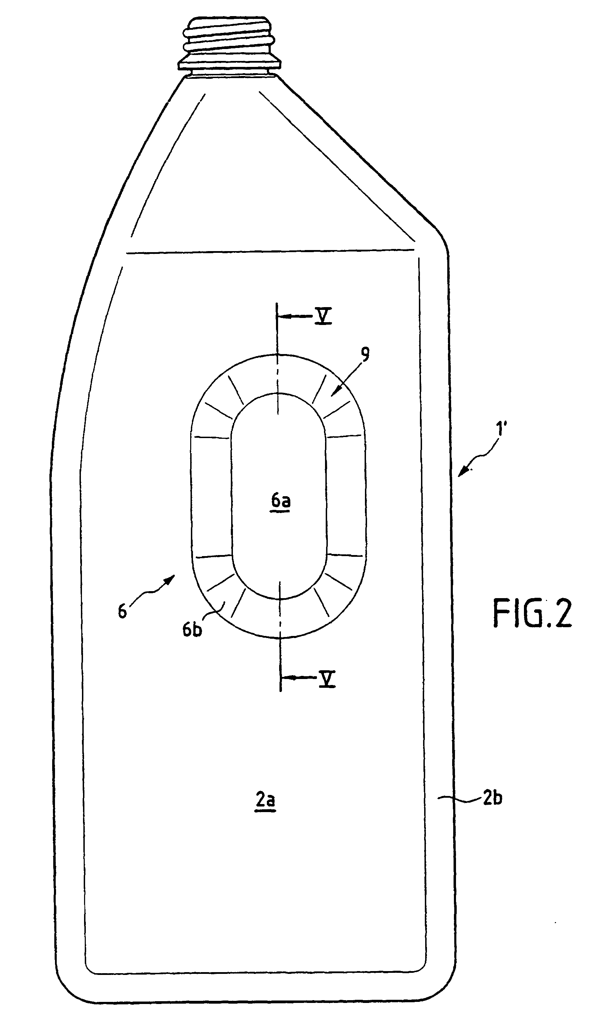

Le récipient final 1' de la figure 2 est obtenu à partir du récipient intermédiaire 1 la figure 1 par déformation des portions 6. Cette déformation est obtenue en exerçant sur la zone centrale 6a une pression transversale, orientée vers l'intérieur du récipient ( figure 4 /flèche F).

Dans une première variante de mise en oeuvre, cette pression est exercée sur le récipient intermédiaire 1' après démoulage, et de préférence immédiatement en sortie de moule lorsque le récipient intermédiaire 1' n'est pas complètement refroidi. Eventuellement, il est possible de chauffer le récipient intermédiaire 1' dans la zone des portions déformables 6 en sorte de faciliter la déformation mécanique de ces portions. De préférence, dans cette première variante, pendant que la pression mécanique est exercée sur les portions déformables 6, l'intérieur du récipient intermédiaire 1' est mis sous faible pression, de préférence à une pression interne qui est légèrement supérieure à celle nécessaire pour la déformation mécanique du récipient (par exemple une pression de l'ordre de quelques bars), au moyen par exemple d'un gaz introduit à l'intérieur du récipient intermédiaire 1, ce qui permet un meilleur maintien en forme des parties non déformables du récipient.

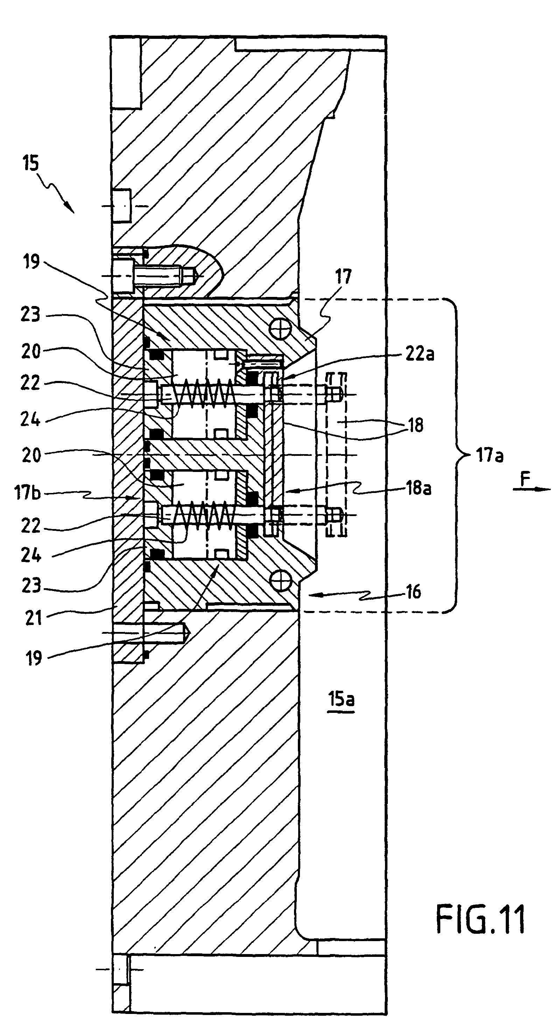

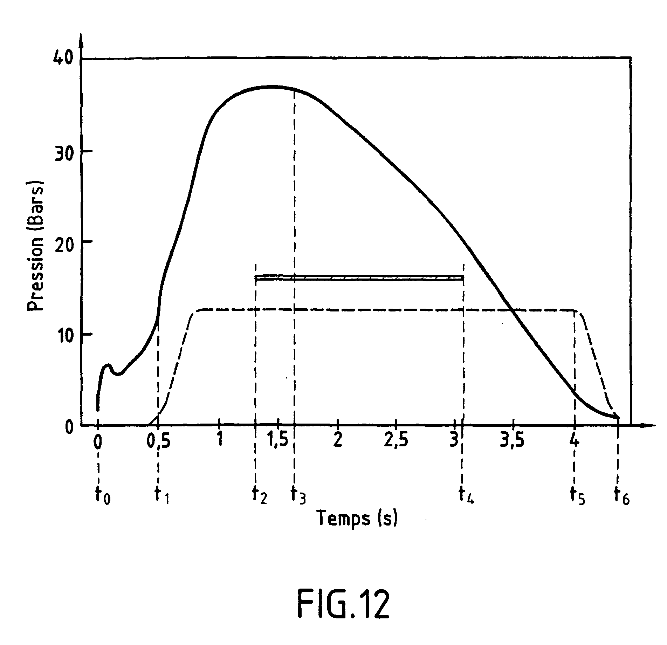

Dans une seconde variante de réalisation, la pression de déformation est exercée, avant démoulage, sur la zone centrale 6a de chaque portion déformable 6 du récipient intermédiaire 1. Cette pression peut être exercée vers la fin du cycle de soufflage (la pression de soufflage étant encore active) ou une fois le cycle de soufflage terminé. Dans ce second cas, il convient de prévoir un maintien sous faible pression du récipient intermédiaire à l'intérieur du moule de manière comparable à la première variante précitée (déformation du récipient à l'extérieur du moule). Dans cette seconde variante, on utilise un moule de soufflage dont les parties, au niveau des deux zones principales 6a du récipient intermédiaire 1, sont mobiles en translation vers l'intérieur du moule. Dans cette seconde variante le récipient obtenu en sortie de moule de soufflage est le récipient final 1' de la figure 2, contrairement à la première variante précitée dans laquelle le récipient obtenu en sortie de moule de soufflage est le récipient intermédiaire 1 de la figure 1. Un exemple particulier de moule de soufflage pour la mise en oeuvre de cette seconde variante de réalisation sera décrit plus en détails ultérieurement en référence aux figures 11 et 12.

La déformation mécanique des portions déformables 6 du récipient intermédiaire 1 permet de faire rentrer chaque zone centrale 6a plus profondément vers l'intérieur du corps creux 2 du récipient. Il en résulte la formation, dans chaque paroi principale 2a du corps creux 2 du récipient final 1', d'un relief en creux 9 (figure 5) dont la profondeur d2 par rapport au plan de référence P-P est nettement supérieure à la profondeur initiale d1 (figure 4) du récipient intermédiaire 1. Ces deux reliefs en creux 9 en vis à vis dans le récipient final 1' permettent de faciliter la préhension du récipient par un utilisateur, la paume de l'utilisateur venant au contact du bord vertical 2b arrière du récipient, tandis que pouce d'une part, et les autres doigts d'autre part de utilisateur enserrent le récipient au niveau des reliefs en creux 9. Les reliefs en creux 9 forment ainsi avec le bord vertical 2b arrière du récipient une poignée de préhension du récipient.

Dans une variante perfectionnée l'invention, mais non limitative de l'invention, illustrée par la vue en coupe de la figure 6, les zones d'articulation 6b de chaque portion déformable 6 sont avantageusement conçues de telle sorte que les zones centrales respectives 6a de chaque relief en creux 9 du récipient final 1' viennent au contact l'une de l'autre. En outre dans une étape supplémentaire de fabrication, les zones centrale 6a sont soudées l'une avec l'autre, par exemple par soudure haute-fréquence. Sur la figure 6, les zones de soudure sont référencées 10.

La soudure des zones centrales 6a permet de limiter le risques de déformation inverse des reliefs en creux 9, sous l'effet notamment d'une pression à l'intérieur du récipient qui aurait tendance à écarter les parois 2a l'une l'autre. Cette soudure des zones centrales 6a est par exemple très utile lorsque le récipient 1' est destiné à contenir une boisson gazeuse. La soudure peut bien évidemment être opérée sur tout ou partie de la surface des zones centrales 6a en contact.

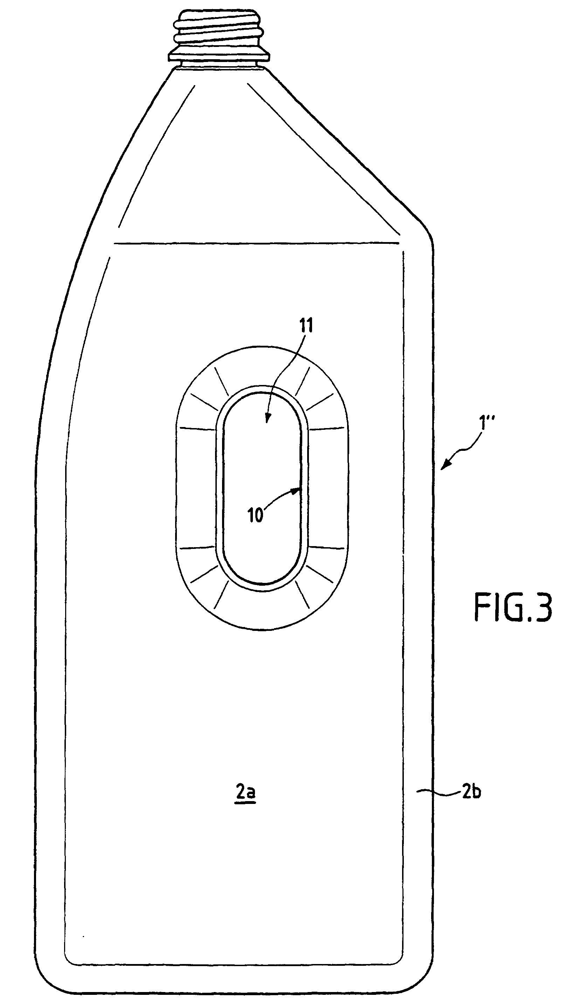

De préférence, la soudure 10 est réalisée sur une portion limitée des zones centrales 6a et selon un contour fermé. Dans une étape ultime de fabrication, on enlève tout ou partie de la matière des zones centrales 6a qui est située à l'intérieur de la zone de soudure. Cet enlèvement de matière est par exemple réalisé par une découpe à l'emporte-pièce. On obtient après découpe un récipient du type du récipient 1" de figure 3, qui comportant un évidemment 11 formant poignée de préhension, et à travers lequel l'utilisateur peut avantageusement passer les doigts en sorte de saisir le récipient par sa partie arrière au niveau de cet évidement 11.

Il revient à l'homme du métier de choisir judicieusement la valeur des rayons de courbure r1, r2 , r3 et r ainsi que la profondeur initiale d1 et la hauteur initiale h1 pour le récipient intermédiaire 1, en fonction notamment de l'épaisseur de paroi et du type de matériau plastique constitutif du récipient. A titre d'exemple non limitatif, dans un exemple précis de réalisation, le récipient était en résine de PET et présentait au niveau de ses portions déformables 6 une épaisseur de paroi sensiblement constante valant environ 0,3mm ; dans les deux portions en arc de cercle 8 de la portion déformable 6, les rayons de courbure r1, r2, r3, et r4 valaient respectivement 1 mm, 15mm 2,7mm, et 4mm ; dans les deux portions rectilignes 7 de la partie déformable 6, les rayons r1, r2, r3 et r4 valant respectivement 1 mm, 15 mm, 3,3 mm et 2 mm ; la profondeur d1 et la hauteur h1 initiales pour le récipient intermédiaire 1 valaient respectivement 3mm et 5,5mm ; la profondeur d2 de chaque relief en creux 9 après déformation du récipient intermédiaire 1 valait environ 15mm.

Dans une variante de réalisation l'invention, il est possible de mettre en oeuvre un profil pour les portions déformables 6 du récipient intermédiaire 1 qui est le profil inverse de celui illustré à la figure 4, la zone centrale 6a n'étant plus en creux , mais étant en saillie (c'est-à-dire orientée vers l'extérieur du récipient) par rapport au plan de référence P-P de la paroi 2a et les portions (CD) et (DE) étant en creux. Pour visualiser ce profil inverse, il suffit d'inverser les mentions « intérieur » et « extérieur » sur la figure 4.

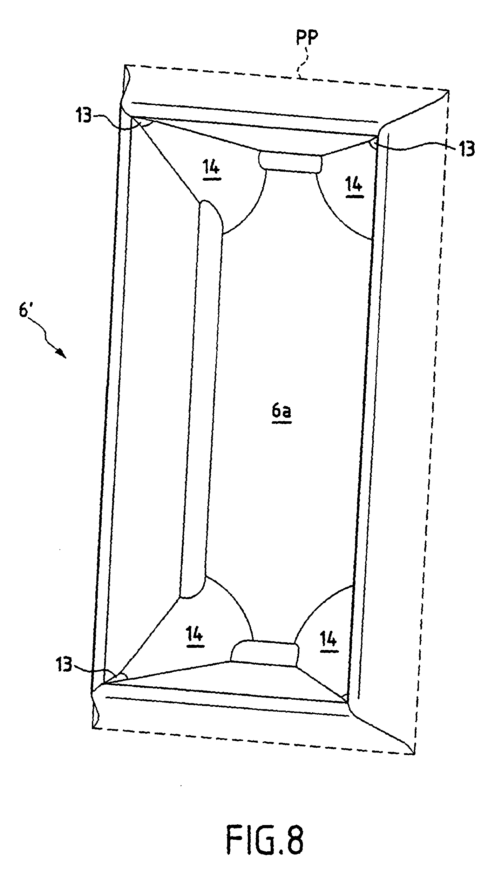

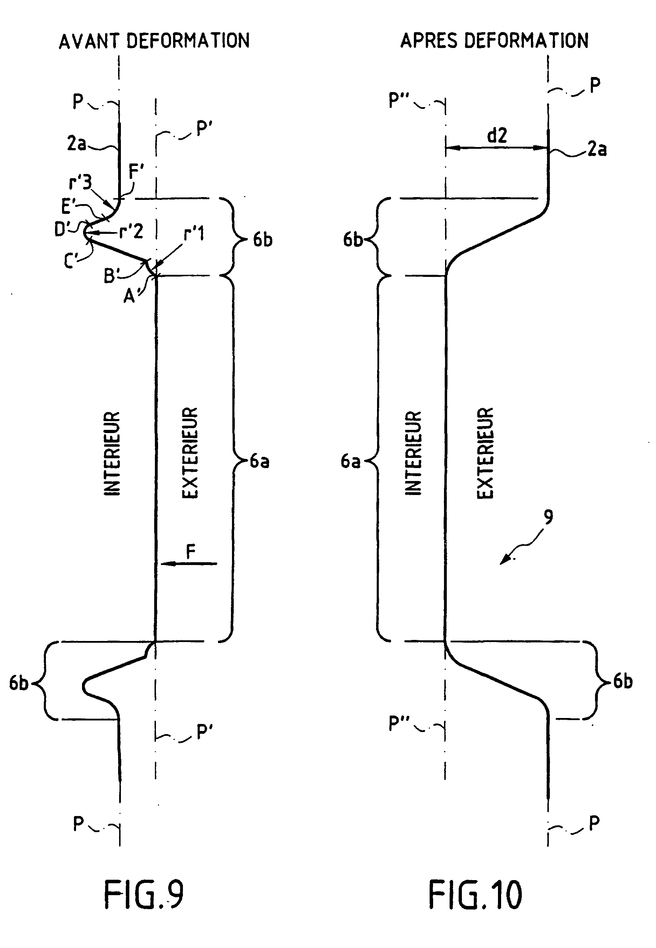

On a représenté aux figures 7 et 8, une autre variante de réalisation d'une portion déformable 6' qui pourrait remplacer chaque portion déformable 6 du récipient intermédiaire 1 de la figure 1, et qui se caractérise par un contour de forme rectangulaire. La figure 9 représente cette portion déformable 6 (avant déformation) vue depuis l'intérieur du récipient intermédiaire. Dans cette variante, la zone centrale principale 6a ( plan P'-P'/ figure 9) avant déformation fait saillie vers l'extérieur du récipient par rapport au plan de référence (P-P). La zone d'articulation 6b est en partie orientée en creux vers l'intérieur du récipient [ figure 9 / portions ( C'D') ( D'E') (E'F') et une partie de la portion rectiligne (B'C') ]. Après déformation par pression ( flèche F/ figure 9) sur la zone centrale 6a, la zone centrale 6a passe de l'autre côté du plan de référence (P-P) et se trouve orientée vers l'intérieur du récipient ( plan P"-P"/ figure 10) en sorte de former un relief en creux 9 présentant une profondeur d2 par rapport au plan de référence (P-P).

Plus particulièrement, en référence à la figure 9, le profil principal de la zone d'articulation 6b avant déformation, est constitué depuis la zone centrale 6a par :
- une première portion courbe (A'B') concave de faible rayon courbure r'1
- une deuxième portion rectiligne (B'C') qui se prolonge au delà du plan de référence (P-P),
- une troisième portion courbe (C'D') concave de faible rayon de courbure r'2,
- une quatrième portion (D'E') rectiligne,
- et une cinquième portion courbe (E'F') convexe de faible rayon de courbure r'3.

Le profil de la portion déformable 6' selon le plan de coupe (C-C) de la figure 7 est similaire au profil de la figure 9. Ce profil est en revanche modifié dans les zones de jonction 12,13,14 au niveau des quatre angles du contour. Chaque zone de jonction 12,13,14 forme une surface concave ( orientée vers l'intérieur du récipient) et agit lors de la déformation comme un « soufflet » permettant un mouvement relatif des deux segments rectilignes à angle droit qu'elle relie.

Dans une autre variante de réalisation, il est possible de prévoir un profil initial avant déformation qui soit l'inverse de celui de la figure 9, la zone centrale 6a étant orientée vers l'intérieur du récipient, de manière comparable au profil de la figure 4, et les portions courbes convexes (respectivement concaves) précitées devenant concaves ( respectivement convexes). Il convient également de noter que le profil de la figure 9 pourrait également être utilisé pour réaliser une portion déformable 6', qui ne présente pas un contour rectangulaire ou carré, mais qui présente un contour du type de celui de la figure 1, ou encore un contour circulaire, elliptique, etc., c'est-à-dire un contour ne présentant pas de portions rectilignes à angle droit. Dans ce cas, le profil pourra être similaire à celui de la figure 9 sur toute la périphérie du contour de la portion déformable, les zones de jonction à fonction de « soufflets » n'étant plus nécessaires.

On a représenté sur la figure 11 un exemple particulier de moule de soufflage 15, qui permet en sortie de moule d'obtenir un récipient final 1' conforme au profil de la figure 5, par étirage et soufflage d'une préforme préalablement obtenue par injection d'une résine thermoplastique. Sur cette figure 11, seule la moitié gauche du moule à été représentée, l'autre moitié droite étant symétrique. Egalement, par soucis de simplification, la tige qui est utilisée avec ce type de moule pour réaliser l'étirage et le soufflage de la préforme, ainsi que les moyens d'alimentation en air sous pression du moule via cette tige ( air de soufflage), n'ont pas été représentés, cette tige et ces moyens d'alimentation en air sous pression étant tout à fait usuels. La paroi intérieure 16 du moule de soufflage 15, qui délimite de manière usuelle la cavité de moulage 15a, est dans l'exemple particulier illustré conformée en sorte de permettre l'obtention dans un premier temps d'un récipient intermédiaire 1 dont la paroi présente le profil inverse de celui illustré sur la figure 4.

Plus particulièrement dans l'exemple de réalisation illustré, le moule de soufflage 15 comporte, pour la réalisation de chaque portion déformable 6 du récipient intermédiaire 1, un insert 17 dont la face avant 17a est conformée selon le profil voulu pour la portion déformable 6 du récipient intermédiaire 1. La partie centrale de la face avant 17a de cet insert est constituée par une plaque 18 qui est mobile en translation dans une direction radiale du moule ( flèche F sur la figure 11) entre deux positions : une position initiale qui est illustrée en trait plein, et dans laquelle la face avant 18a de la plaque 18 forme avec le reste de la face avant 17a de l'insert une surface de moulage continue ; une position sortie qui est illustrée en pointillés, et dans laquelle la plaque mobile 18 est rentrée vers l'intérieur de la cavité de moulage 15a. La face avant 18a de cette plaque 18 est destinée à former par moulage la zone centrale 6a de la portion déformable 6 du récipient intermédiaire 1'.

Pour son déplacement la plaque mobile 18 est actionnée par deux vérins pneumatiques 19. Plus particulièrement, l'insert 17 comporte, pour chaque vérin 19, une chambre de compression 20 débouchante sur la face arrière 17b de l'insert 17. Une plaque arrière de fermeture 21 est fixée de manière amovible , par exemple en étant vissée, contre la face arrière 17b de l'insert. Cette plaque 21 permet d'assurer une fermeture étanche de chaque chambre 20. Chaque chambre 20 est prévue pour être alimentée en air sous pression, via des canaux d'alimentation (non visibles sur la figure 11) réalisés dans la plaque de fermeture 21. Chaque vérin 19 comporte une tige 22, dont l'extrémité avant 22a est fixée à la plaque 18, et dont l'extrémité arrière porte un piston 23. Sur la tige 22 de chaque vérin est enfilé un ressort de rappel 24 , permettant de ramener en position arrière le piston 23 ( position illustrée en trait plein sur la figure 11). Le processus de fabrication d'un récipient final 1' (bouteille plastique en PET de 1,51) au moyen du moule de soufflage 15 de la figure 11 va à présent être détaillé en référence aux courbes de la figures 12. Sur cette figure 12, la courbe en trait plein est de manière usuelle appelée courbe de soufflage, et correspond à la pression de l'air introduit à l'intérieur de la cavité 15a du moule pour réaliser le soufflage du récipient ; la courbe en pointillés représente la pression d'air pour la commande de chaque vérin 19.

Initialement (instant t0), au début du cycle de fabrication, la plaque 18 de chaque insert 17 du moule est en position initiale, chaque chambre 20 n'étant pas alimentée en air sous pression, les pistons 23 étant ramenés en position arrière par les ressorts de rappel 24. Après introduction d'une préforme dans le moule de soufflage 15 et fermeture du moule, on démarre le cycle de fabrication du récipient, par étirage et soufflage de la préforme. Le soufflage de la préforme se décompose en deux étape principales : une première étape ( t0 à t3) au cours de laquelle on introduit l'air de soufflage sous pression à l'intérieur de la préforme, et une seconde étape ( période t3 à t6) au cours de laquelle on réalise une évacuation contrôlée de l'air contenu à l'intérieur du moule en sorte de diminuer progressivement la pression d'air à l'intérieur du récipient formé. Plus particulièrement, dans la première étape, on commence par une étape initiale dite de pré-soufflage ( période t0 à t1) qui est connue en soit. A l'issue de cette étape de pré-soufflage, démarre l'étape d'étirage et soufflage proprement dite de la préforme (période t1 à t3), au cours de laquelle on augmente fortement la pression d'air de soufflage. Sur la figure 12, l'instant t2 correspond à la fin de la formation du récipient intermédiaire 1. Parallèlement, à la fin de l'étape de pré-soufflage on commence à alimenter en air sous pression les chambres 20 des vérins. L'alimentation en air sous pression des chambres 20 des vérins 19 est interrompue à l'instant t5, les plaques mobiles 18 revenant en position initiale arrière ( pour le cycle suivant) sous l'action des ressorts 24.

Pendant la période s'étendant sensiblement entre les instants t2 et t4 sur la figure 12, se produit la déformation de la paroi du récipient intermédiaire 1, sous l'action des forces de pression mécanique exercées vers l'intérieur de la cavité 15a du moule par chaque plaque mobile 18 déplacée par les vérins 19. On forme ainsi pendant cette période (t2 à t4) le récipient final 1' dont le profil de paroi est conforme à la figure 5, par déformation mécanique des portions déformables 6 du récipient intermédiaire 1. Dans cette période (t2 à t4), l'instant précis auquel on obtient la déformation de la paroi est variable d'une application à l'autre, et dépend de nombreux facteurs, dont notamment les pressions d'air mises en jeu (air de soufflage et air alimentant les chambres 20 des vérins 19), l'épaisseur et le profil de paroi du récipient intermédiaire 1 au niveau de ses portions déformables 6, le matériau plastique utilisé. A l'issue du cycle de fabrication illustré par les courbes de la figure 12, on ouvre de manière usuelle le moule 15 en sorte de démouler le récipient final 1'.

## Revendications

1. Récipient (1' ; 1") vide en plastique **caractérisé en ce qu'**il est obtenu à partir d'un récipient intermédiaire (1) comprenant au moins une portion (6) qui est préformée pour être déformable mécaniquement, et qui a été déformée en sorte de former un relief en creux (9).

2. Récipient selon la revendication 1 **caractérisé en ce qu'**une portion déformable (6) comporte une zone centrale principale (6a) entourée par une zone d'articulation périphérique (6b), et a été déformée par pression sur la zone centrale (6a) en sorte de rentrer ou de faire pénétrer plus profondément la zone centrale (6a) vers l'intérieur du récipient.

3. Récipient selon la revendication 2 **caractérisé en ce que** la zone centrale principale (6a) est orientée vers l'intérieur du récipient intermédiaire (respectivement vers l'extérieur du récipient intermédiaire) et la zone d'articulation (6b) comporte une partie en saillie (respectivement en creux).

4. Récipient selon la revendication 3 **caractérisé en ce que** la zone d'articulation 6b est orientée vers l'intérieur (respectivement vers l'extérieur) du récipient intermédiaire et comporte un profil qui est constitué depuis la zone centrale 6a par :
- une premier portion courbe (AB) concave (respectivement convexe) de rayon de courbure r1,
- une deuxième portion courbe (BC) convexe (respectivement concave) de rayon de courbure r2 supérieur à r1,
- une troisième portion courbe (CD) convexe (respectivement concave) de rayon de courbure r3 inférieur à r2 et supérieur à r1,
- et une quatrième portion courbe (DE) concave (respectivement convexe) de rayon r4 inférieur ou égal à r3.

5. Récipient selon la revendication 3 **caractérisé en ce que** la zone d'articulation 6b est orientée vers l'extérieur (respectivement vers l'intérieur) du récipient intermédiaire et comporte un profil qui est constitué depuis la zone centrale 6a par :
- une première portion courbe (A'B') concave (respectivement convexe) de rayon courbure r'1,
- une deuxième portion rectiligne (B'C'),
- une troisième portion courbe (C'D') concave (respectivement convexe) de rayon de courbure r'2,
- une quatrième portion (D'E') rectiligne,
- et une cinquième portion courbe (E'F') convexe (respectivement concave) de rayon de courbure r'3.

6. Récipient selon l'une des revendications 1 à 5 **caractérisé en ce qu'**il comporte deux reliefs en creux (9) en vis à vis, qui forment une poignée de préhension.

7. Récipient selon la revendication 6 **caractérisé en ce que** les deux portions (6a) formant poignée de préhension sont au contact l'une de l'autre.

8. Récipient (1") selon la revendication 7 **caractérisé en ce que** les deux reliefs en creux (9) sont soudés l'un à l'autre sur tout ou partie de leur zone de contact.

9. Procédé de fabrication d'un récipient final (1') en plastique visé à l'une des revendications 1 à 8 **caractérisé en ce qu'**on réalise un récipient intermédiaire (1) par soufflage d'une résine thermoplastique dans un moule dont les parois sont conformées en sorte de préformer la ou les portions déformables (6), et **en ce que** avant ou après démoulage du récipient intermédiaire (1), on exerce une pression (F) sur chaque portion déformable (6) du récipient intermédiaire (1) en sorte de former chaque relief en creux (9) et obtenir le récipient final (1').

10. Procédé selon la revendication 9 **caractérisé en ce qu'**on étire et on souffle une préforme dans le moule, le soufflage de la préforme se décomposant en deux étape principales : une première étape ( 10 à t3) au cours de laquelle on introduit l'air de soufflage sous pression à l'intérieur de la préforme, et une seconde étape ( période t3 à t6) au cours de laquelle on réalise une évacuation contrôlée de l'air contenu à l'intérieur du moule, et **en ce que** parallèlement, une fois le récipient intermédiaire (1) formé, et avant la fin de la seconde étape de soufflage, on exerce sur la ou les portions déformables (6) du récipient intermédiaire (1) une pression mécanique orientée vers l'intérieur du moule en sorte de déformer la ou les portions déformables du récipient intermédiaire (1) et de former le récipient final (1').

11. Procédé selon la revendication 9 ou 10 **caractérisé en ce que** le récipient final (1') comportant après déformation deux reliefs en creux (9) en contact l'un avec l'autre, dans une étape supplémentaire on soude l'un à l'autre les reliefs en creux (9) sur tout ou partie de leur zone de contact.

12. Procédé selon la revendication 11 **caractérisé en ce que** la soudure des reliefs en creux (9) est réalisée selon un contour fermé (10).

13. Procédé selon la revendication 12 **caractérisé en ce que** dans une étape ultime on enlève tout ou partie de la matière du récipient à l'intérieur de la zone de soudure, en sorte de former un évidement (11).

14. Moule de soufflage pour la fabrication d'un récipient final (1') en plastique par étirage/soufflage d'une préforme, ledit moule comportant une cavité de soufflage (15a) délimitée par une paroi intérieure (16), **caractérisé en ce que** la paroi intérieure (16) comporte au moins une partie (18) mobile en translation, et **en ce que** le moule de soufflage comporte des moyens (19,20,22 ,23,24) de déplacement de cette partie mobile (18) entre une position initiale dans laquelle la partie mobile (18) forme avec le reste de la paroi (16) une surface de moulage continue, et une position sortie dans laquelle la partie mobile est rentrée vers l'intérieur de la cavité de soufflage (15a).

15. Moule de soufflage selon la revendication 14 **caractérisé en ce que** les moyens de déplacement de chaque partie mobile (18) comportent au moins un vérin (19).

16. Moule de soufflage selon la revendication 15 **caractérisé en ce qu'**il comprend au moins un insert (17) dont la face avant (17a) orientée vers l'intérieur de la cavité de soufflage (15a) est conformée selon un profil courbe donné, **en ce que** la partie mobile (18) de la paroi du moule est formée par la partie centrale de la face avant (17a) de cet insert, et en que cet insert comporte pour chaque vérin (19) une chambre (20) prévue pour être alimentée en air sous pression, en sorte de commander le déplacement de la tige (22) du vérin (19).

## Patentansprüche

1. Leerer Kunststoffbehälter (1'; 1") **dadurch gekennzeichnet, dass** er aus einem Zwischenbehälter (1) mit wenigstens einem Teilbereich (6), welcher vorgeformt wird, um mechanisch verformbar zu sein und welcher verformt wurde, um eine Vertiefung auszubilden (9), erhalten wird.

2. Behälter nach Anspruch 1, **dadurch gekennzeichnet, dass** ein verformbarer Teilbereich (6) einen mittleren, von einem umfangseitigen Gelenkbereich (6b) umgebenen Hauptbereich (6a) enthält und durch Druck auf den Mittelbereich (6a) verformt worden ist, so dass der Mittelbereich (6a) tiefer zum Innenraum des Behälters zurückgesetzt wird oder hineingeht.

3. Behälter nach Anspruch 2, **dadurch gekennzeichnet, dass** der mittlere Hauptbereich (6a) zum Innenraum des Zwischenbehälters (bzw. zur Außenseite des Zwischenbehälters) gerichtet ist und dass der Gelenkbereich (6b) einen vorspringenden (bzw. vertieften) Bereich aufweist.

4. Behälter nach Anspruch 3, **dadurch gekennzeichnet, dass** der Gelenkbereich (6b) zum Innenraum (bzw. zur Außenseite) des Zwischenbehälters gerichtet ist und ein Profil aufweist, das von dem Mittelbereich (6a) aus gebildet ist von:
- einem ersten konkav (bzw. konvex) gebogenen Abschnitt (AB) mit einem Krümmungsradius r1,
- einem zweiten konvex (bzw. konkav) gebogenen Abschnitt (BC) mit einem Krümmungsradius r2, welcher größer ist als r1,
- einem dritten konvex (bzw. konkav) gebogenen Abschnitt (CD) mit einem Krümmungsradius r3, welcher kleiner ist als r2 und größer ist als r1,
- und einem vierten konkav (bzw. konvex) gebogenen Abschnitt (DE), mit einem Radius r4, welcher kleiner oder gleich r3 ist.

5. Behälter nach Anspruch 3, **dadurch gekennzeichnet, dass** der Gelenkbereich (6b) zur Außenseite (bzw. zum Innenraum) des Zwischenbehälters gerichtet ist und ein Profil aufweist, das von dem Mittelbereich (6a) aus gebildet ist von:
- einem ersten konkav (bzw. konvex) gebogenen Abschnitt (A'B') mit einem Krümmungsradius r'1,
- einem zweiten geradlinigen Abschnitt (B'C'),
- einem dritten konkav (bzw. konvex) gebogenen Abschnitt (C'D') mit einem Krümmungsradius r'2,
- einem vierten geradlinigen Abschnitt (D'E'),
- und einem fünften konvex (bzw. konkav) gebogenen Abschnitt (E'F') mit einem Krümmungsradius r'3.

6. Behälter nach einem der Ansprüche 1 bis 5, **dadurch gekennzeichnet, dass** er zwei gegenüberliegende Vertiefungen (9) aufweist, die einen Handgriff bilden.

7. Behälter nach Anspruch 6, **dadurch gekennzeichnet, dass** die beiden einen Handgriff bildenden Teilbereiche (6a) miteinander in Kontakt sind.

8. Behälter (1") nach Anspruch 7, **dadurch gekennzeichnet, dass** die zwei Vertiefungen (9) über ihren gesamten Kontaktbereich oder über einen Teilbereich dessen zusammengeschweißt sind.

9. Verfahren zur Herstellung eines Endbehälters (1') aus Kunststoff aus einem der Ansprüche 1 bis 8, **dadurch gekennzeichnet, dass** ein Zwischenbehälter (1) durch Blasen eines thermoplastischen Harzes in eine Form hergestellt wird, deren Wände derart ausgebildet sind, dass der oder die verformbare(n) Teilbereich(e) (6) vorgeformt wird/werden, und dass vor oder nach dem Ausformen des Zwischenbehälters (1) auf jeden verformbaren Teilbereich (6) des Zwischenbehälters (1) ein Druck (F) ausgeübt wird, so dass jede Vertiefung (9) gebildet und der endgültige Behälter (1') erhalten wird.

10. Verfahren nach Anspruch 9, **dadurch gekennzeichnet, dass** ein Vorformling in der Form gezogen und geblasen wird, wobei das Blasen des Vorformlings in zwei Hauptschritte gegliedert ist, nämlich in einen ersten Schritt (t0 bis t3), während dessen die Blasluft unter Druck in das Innere des Vorformlings eingeleitet wird, und in einen zweiten Schritt (Zeitraum t3 bis t6), während dessen ein kontrolliertes Abziehen der im Inneren der Form enthaltenen Luft vollzogen wird, und dass parallel - sobald der Zwischenbehälter (1) ausgebildet und bevor der zweite Schritt des Blasens beendet ist - auf den oder die verformbaren Teilbereich(e) (6) des Zwischenbehälters (1) ein mechanischer, zum Forminnenraum gerichteter Druck ausgeübt wird, so dass der oder die verformbare(n) Teilbereich(e) des Zwischenbehälters (1) verformt wird bzw. werden und der endgültige Behälter (1') ausgebildet wird.

11. Verfahren nach Anspruch 9 oder 10, **dadurch gekennzeichnet, dass** - da der Endbehälter (1') nach der Verformung zwei miteinander in Kontakt befindliche Vertiefungen (9) enthält - in einem zusätzlichen Schritt die Vertiefungen (9) über ihren gesamten Kontaktbereich oder über einen Teilbereich dessen zusammengeschweißt werden.

12. Verfahren nach Anspruch 11, **dadurch gekennzeichnet, dass** das Schweißen der Vertiefungen (9) entlang einer geschlossenen Kontur (10) erfolgt.

13. Verfahren nach Anspruch 12, **dadurch gekennzeichnet, dass** in einem letzten Schritt das gesamte Material oder ein Teil des Materials des Behälters innerhalb des Schweißbereichs entfernt wird, so dass eine Aussparung (11) gebildet wird.

14. Blasform für die Herstellung eines Endbehälters (1') aus Kunststoff durch Streckblasen eines Vorformlings, wobei die Form einen Blashohlraum (15a) aufweist, der von einer Innenwand (16) begrenzt ist, **dadurch gekennzeichnet, dass** die Innenwand (16) wenigstens einen verschiebebeweglichen Teil (18) aufweist, und dass die Blasform Mittel (19, 20, 22, 23, 24) zum Bewegen dieses beweglichen Teils (18) zwischen einer Ausgangsposition, in welcher der bewegliche Teil (18) mit der übrigen Wand (16) eine ununterbrochene Formfläche bildet, und einer ausgefahrenen Position, in welcher der bewegliche Teil zum Inneren des Blashohlraums (15a) eingefahren ist, aufweist.

15. Blasform nach Anspruch 14, **dadurch gekennzeichnet, dass** die Mittel zum Bewegen eines jeden beweglichen Teils (18) wenigstens einen Zylinder (19) aufweisen.

16. Blasform nach Anspruch 15, **dadurch gekennzeichnet, dass** sie wenigstens einen Einsatz (17) aufweist, dessen zum Inneren des Blashohlraums (15a) gerichtete Vorderseite (17a) nach einem vorgegebenen gebogenen Profil gestaltet ist, dass der bewegliche Teil (18) der Wand der Form von dem Mittelteil der Vorderseite (17a) dieses Einsatzes gebildet ist, und dass dieser Einsatz für jeden Zylinder (19) eine Kammer (20) aufweist, die vorgesehen ist, um mit Druckluft beaufschlagt zu werden, um die Bewegung der Stange (22) des Zylinders (19) zu steuern.

## Claims

1. Empty container (1'; 1") made of plastic, **characterised in that** it is obtained from an intermediate container (1) including at least one portion (6) that is preformed to be mechanically deformable and that was deformed so as to form a hollow embossment (9).

2. Container according to claim 1, **characterised in that** a deformable portion (6) comprises a main central zone (6a) surrounded by a peripheral articulation zone (6b), and is capable of being deformed by pressure on the central zone (6a) so as to push in the central zone (6a) or cause it to penetrate deeper towards the interior of the container.

3. Container according to claim 2, **characterised in that** the main central zone (6a) is orientated towards the interior of the intermediate container (respectively towards the exterior of the intermediate container) and the articulation zone (6b) comprises a projecting (respectively hollow embossment) part.

4. Container according to claim 3, **characterised in that** the articulation zone (6b) is orientated towards the interior (respectively towards the exterior) of the intermediate container and comprises a profile that is constituted, starting from the central zone (6a), by:
- a first concave (respectively convex) curved portion (AB) having a radius of curvature r1,
- a second convex (respectively concave) curved portion (BC) having a radius of curvature r2 greater than r1,
- a third convex (respectively concave) curved portion (CD) having a radius of curvature r3 less than r2 and greater than r1,
- and a fourth concave (respectively convex) curved portion (DE) having a radius r4 less than or equal to r3.

5. Container according to claim 3, **characterised in that** the articulation zone (6b) is orientated towards the exterior (respectively towards the interior) of the intermediate container and comprises a profile that is constituted, starting from the central zone (6a) by:
- a first concave (respectively convex) curved portion (A'B') having a radius of curvature r'1,
- a second rectilinear portion (B'C'),
- a third concave (respectively convex) curved portion (C'D') having a radius of curvature r'2,
- a fourth rectilinear portion (D'E'),
- and a fifth convex (respectively concave) curved portion (E'F') having a radius of curvature r'3.

6. Container according to one of claims 1 to 5, **characterised in that** it comprises two facing hollow embossments (9) that form a gripping handle.

7. Container according to claim 6, **characterised in that** the two portions (6a) that form a gripping handle are in contact with one another.

8. Container (1 ") according to claim 7, **characterised in that** the two hollow embossments (9) are welded to one another over all or part of their zone of contact.

9. Method for manufacturing a final container (1') made of plastic referred to in one of claims 1 to 8, **characterised in that** an intermediate container (1) is produced by blowing a thermoplastic resin in a mould the walls of which are shaped so as to preform the deformable portion or portions (6), and **in that**, prior to or after removal from the mould of the intermediate container (1), a pressure (F) is exerted on each deformable portion (6) of the intermediate container (1) so as to form each hollow embossment (9) and obtain the final container (1').

10. Method according to claim 9, **characterised in that** a preform is drawn and blown in the mould, with the blowing of the preform breaking down into two main steps: a first step (t0 to t3) during which the blowing air under pressure is introduced into the preform, and a second step (period t3 to t6) during which the air contained in the mould is evacuated in a controlled manner, and **in that**, in parallel, once the intermediate container (1) has been formed, and before the end of the second blowing step, there is exerted on the deformable portion or portions (6) of the intermediate container (1) a mechanical pressure orientated towards the interior of the mould so as to deform the deformable portion or portions of the intermediate container (1) and to form the final container (1').

11. Method according to claim 9 or 10, **characterised in that** the final container (1') comprising, after deformation, two hollow embossments (9) in contact with one another, in an additional step, the hollow embossments (9) are welded to one another over all or part of their zone of contact.

12. Method according to claim 11, **characterised in that** the hollow embossments (9) are welded along a closed contour (10).

13. Method according to claim 12, **characterised in that**, in a final step, all or part of the material of the container inside the welding zone is removed, so as to form a recess (11).

14. Blow mould for the manufacture of a final container (1') made of plastic by stretching / blowing a preform, said mould comprising a blowing cavity (15a) delimited by an interior wall (16), **characterised in that** the interior wall (16) comprises at least one part (18) that is mobile in translation, and **in that** the blow mould comprises means (19, 20, 22, 23, 24) for displacing this mobile part (18) between an initial position in which the mobile part (18) forms with the rest of the wall (16) a continuous moulding surface, and an extended position, in which the mobile part is moved in towards the interior of the blowing cavity (15a).

15. Blow mould according to claim 14, **characterised in that** the means for displacing each mobile part (18) comprise at least one jack (19).

16. Blow mould according to claim 15, **characterised in that** it includes at least one insert (17) whereof the front face (17a) orientated towards the interior of the blowing cavity (15a) is shaped so as to have a given curved profile, **in that** the mobile part (18) of the wall of the mould is formed by the central part of the front face (17a) of this insert, and **in that** this insert comprises, for each jack (19), a chamber (20) designed to be supplied with air under pressure, so as to control the displacement of the rod (22) of the jack (19).
